# EUROPEAN PATENT APPLICATION

(11) **EP 1 549 061 A1**
(43) Date of publication of application: **29.06.2005**
(21) Application number: 03748658.6
(22) Date of filing: 01.10.2003
(51) Int. Cl.: H04N 5/92

(54) **BROADCAST SYSTEM, RECORDING DEVICE, RECORDING METHOD, PROGRAM, AND RECORDING MEDIUM**

(30) Priority: 01.10.2002 JP 2002288438
(71) Applicant: Sony Corporation, Tokyo 141-0001 (JP)
(72) Inventor: NAKAYAMA, Ayako, c/o SONY CORPORATION, Tokyo 141-0001 (JP)
(74) Representative: DeVile, Jonathan Mark, Dr.
(86) International application number: PCT/JP2003/012605
(87) International publication number: WO 2004/032505

(57) **Abstract**

A broad casting system which can automatically record only contents matching needs of a user and effectively save a capacity of storing means. First, with a transmission apparatus, the broadcasting system sends contents data and classification identifying information, which corresponds to and indicates details of a data part considered to have details different from each other forming the contents data as one program. In addition to this, on a recording apparatus side, the broadcasting system detects matching with the received classification identifying information and designated classification identifying information such that only a data part corresponding to classification identifying information, for which matching has been detected in this way, of the received contents data is recorded in storing means. Alternatively, the broadcasting system makes it possible to set required data as key information according to an operation. Then, the broadcasting system performs detection for a data part, which matches the set key information, of the received contents data such that, in response to the data part matching the key information being detected from the received contents data in this way, only a required data part including and following this data part is recorded in the storing means.

## Description

### TECHNICAL FIELD

The present invention relates to a broadcasting system consisting of at least a transmission apparatus for sending contents data and a recording apparatus which can record the contents data. In addition, the present invention relates to a recording apparatus which can record contents data, a recording method in this recording apparatus, a program which is executed by the recording apparatus, and a recording medium having this program recorded therein.

### BACKGROUND ART

As AV equipment which can record and reproduce contents such as audio data and video data provided as a broadcasting program, those having a program recording function corresponding to digital broadcasting have been spread in recent years.

As a recording apparatus corresponding to such digital broadcasting, for example, there is one including a mass storage medium such as an HDD (hard disk drive), which makes it possible to record a large volume of received contents.

Utilizing the fact that it is possible to record a large volume of contents, in the recording apparatus as described above, automatic recording for automatically capturing broadcasting contents in a storage medium is per formed. Further, by performing the automatic recording in this way, time and labor of a user for manual programming for recording are saved to improve convenience.

As such an automatic recording function, there have been conventionally proposed various ones utilizing an electronic program guide (EPG) in digital broadcasting.

For example, it is made possible to perform so-called category designated automatic recording for collectively recording programs corresponding to a category designated by a user utilizing category information in the EPG.

In addition, it is made possible to perform so-called keyword designated automatic recording for searching through the EPG on the basis of a keyword designated or inputted by a user and collectively recording only programs which include this keyword in program information.

By utilizing such various automatic recording functions, a user can efficiently record programs, which are considered to match needs of the user, in a storage medium out of various kinds of broadcasting programs.

Incidentally, in the case in which automatic recording of a program is performed with a category or a keyword designated as described above, the user does not always require all programs recorded in this way.

In addition, there are not a few cases in which, concerning contents of one program automatically recorded as described above, the user does not always require the entire program but requires only a certain specific details part in this one program. For example, assuming that the user has performed automatic recording designating a category of "news" with the category designated automatic recording as described above, the user may actually require, for example, only information on stock prices among such news programs. Further, for example, in the case in which automatic recording for an entertainment program is performed, it is possible that the user actually wishes to retain only details of contents of a certain section of the program in a storage medium.

However, in such a case, the automatic recording function illustrated above can designate an object of recording by a unit of program at the most under the present situation, and cannot designate more minute items as an object of recording.

Therefore, even if automatic recording is performed designating a category or a keyword as described above, it is likely that a lot of unnecessary data parts, which the user does not actually require, are included in contents data which are recorded in a storage medium by the automatic recording.

Consequently, it cannot be said that the conventional automatic recording is a sufficient function from the viewpoint of efficiently recording only contents required by the user.

In addition, in the state in which even data, which is not actually required, is recorded in a storage medium as described above, even if a mass storage medium such as an HDD is used, it is preferable that a storage capacity is saved as much as possible because a capacity of the storage medium is limited.

### DISCLOSURE OF THE INVENTION

Thus, in the present invention, in view of the problems as described above, a broadcasting system, which consists of at least a transmission apparatus for sending contents data, and a recording apparatus, which can record the contents data, is constituted as described below.

That is, first, the transmission apparatus is adapted to include: contents sending means which sends the contents data; classification information generating means which generates predetermined classification identifying information corresponding to a data part considered to have details of contents different from each other in the contents data as one program; and classification information sending means which sends the corresponding classification information generated by the classification information generating means so as to associates the classification identifying information with the data part which should be sent by the contents sending means.

In addition, the recording apparatus is adapted to include: receiving means which receives the contents data and the classification identifying information; detecting means which detects matching of the classification identifying information received by the receiving means and classification identifying information designated in advance; and recording control means which performs control such that only a data part corresponding to classification identifying information, for which matching has been detected by the detecting means, of the contents data received by the receiving means is recorded in storing means.

In addition, in the present invention, the recording apparatus is constituted as described below.

That is, the recording apparatus is adapted to include receivingmeans which receives contents data and classification identifying information which corresponds to and indicates details of a data part considered to have details different from each other forming the contents data as one program, and further include: detecting means which detects matching of the classification identifying information received by the receiving means and classification identifying information designated in advance; and recording control means which performs control such that only a data part corresponding to classification identifying information, for which matching has been detected by the detecting means, of the contents data received by the receiving means is recorded in storing means.

Further, in the present invention, the recording method is constituted as described below.

That is, the recording method is adapted to execute reception processing for receiving contents data and classification identifying information which corresponds to and indicates details of a data part considered to have details different from each other forming the contents data as one program, and to further execute: detection processing for detecting matching of the classification identifying information received by the reception processing and classification identifying information designated in advance; and recording control processing for recording only a data part corresponding to classification identifying information, for which matching has been detected by the detection processing, of the contents data received by the reception processing in storing means.

Moreover, in the present invention, the program is constituted as described below.

That is, the program is adapted to cause a recording apparatus to execute: reception processing for receiving contents data and classification identifying information which corresponds to and indicates details of a data part considered to have details different from each other forming the contents data as one program; detection processing for detectingmatching of the classification identifying information received by the reception processing and classification identifying information designated in advance; and recording control processing for recording only a data part corresponding to classification identifying information, for which matching has been detected by the detection processing, of the contents data received by the reception processing in storing means.

Furthermore, in the present invention, the recording medium is constituted as described below.

Thatis, the recording medium is adapted to record a program for causing a recording apparatus to execute: reception processing for receiving contents data and classification identifying information which corresponds to and indicates details of a data part considered to have details different from each other forming the contents data as one program; detection processing for detecting matching of the classification identifying information received by the reception processing and classification identifying information designated in advance; and recording control processing for recording only a data part corresponding to classification identifying information, for which matching has been detected by the detection processing, of the contents data received by the reception processing in storing means.

According to the present invention, contents data and classification identifying information, which corresponds to and indicates details of a data part considered to have details different from each other forming the contents data as one program, are sent from the transmission apparatus side.

In addition to the above, matching of the received classification identifying information and the designated classification identifying information is detected on the recording apparatus side. Then, only a data part corresponding to the classification identifying information, for which matching has been detected in this way, of the received contents data is recorded in the storing means.

Consequently, according to the present invention, it becomes possible to record only a required data part in a broadcasting program corresponding to details of a designated classification identifier.

In addition, in the present invention, the recording apparatus is also constituted as described below.

That is, first, the recording apparatus is adapted to include receiving means which can receive contents data as a broadcasting program, and further include: key information setting means which can set required data as key information according to an operation; and detecting means which can detect a data part matching the key information, which has been set by the key information setting means, from the contents data received in the receiving means.

In addition to the above, the recording apparatus is adapted to include recording control means which performs control such that only a required data part including and following the data part, for which matching has been detected by the detecting means, of the contents data received by the receiving means is recorded in a storage medium.

Further, in the present invention, the recording method is also constituted as described below.

That is, first, the recording method is adapted to execute reception processing for receiving contents data as a broadcasting program, and further executes: key information setting processing for setting required data as key information according to an operation; and detection processing for detecting a data part matching the key information, which has been set by the key information setting processing, from the contents data received by the reception processing.

In addition to the above, the recording method is adapted to execute recording control processing for recording only a required data part including and following the data part, for which matching has been detected by the detection processing, of the contents data received by the reception processing in a storage medium.

Moreover, in the present invention, the program is also constituted as described below.

That is, the program is adapted to cause a recording apparatus to execute: reception processing for receiving contents data as a broadcasting program; key information setting processing for setting required data as key information according to an operation; detection processing for detecting a data part matching the key information, which has been set by the key information setting processing, from the contents data received by the reception processing; and recording control processing for recording only a required data part including and following the data part, for which matching has been detected by the detection processing, of the contents data received by the reception processing in a storage medium.

Furthermore, in the present invention, the recording medium is also constituted as described below.

That is, the recording medium is adapted to recordaprogram for causing a recording apparatus to execute: reception processing for receiving contents data as a broadcasting program; key information setting processing for setting required data as key information according to an operation; detection processing for detecting a data part matching the key information, which has been set by the key information setting processing, from the contents data received by the reception processing; and recording control processing for recording only a required data part including and following the data part, for which matching has been detected by the detection processing, of the contents data received by the reception processing in a storage medium.

In this case, first, required key information such as an image or a voice is set out of, for example, contents data received in the past, according to an operation. Then, detection for a data part, whichmatches the set key information, of the received contents data is performed, and in the case in which the data part matching the key information are detected from the received contents data in this way, only a required data part including and following this data part is recorded in storing means.

For example, if a specific title screen in a certainprogram is set as the key information, in the case in which a data part matching the title screen is detected from the received contents data, only a data part including and following the data part, which includes this title screen, is stored in the storing means.

Consequently, it also becomes possible to record only a required data part in a broadcasting program.

### BRIEF DESCRIPTION OF THE DRAWINGS

Fig. 1 is a diagram showing an entire structure of a digital satellite broadcasting system 1 as a first embodiment in the present invention;
Fig. 2 is a block diagram showing an example of an internal structure of a recording apparatus 10 which constitutes the digital satellite broadcasting system 1;
Fig. 3 is a diagram illustrating details of classification codes which are attached to broadcasting contents in the digital satellite broadcasting system 1;
Figs. 4A and 4B are diagrams for explaining operation procedures at the time of classification code recording programming;
Fig. 5 is a flowchart showing an operationwhich is obtained in association with the time of classification code recording programming in the recording apparatus 10;
Fig. 6 is a flowchart showing an operationwhich is obtained in association with the time of classification code recording operation in the recording apparatus 10;
Fig. 7 is a flowchart showing an operation as amodification in the recording apparatus 10;
Fig. 8 is a flowchart showing an operation as amodification in the recording apparatus 10;
Fig. 9 is a block diagram showing an example of an internal structure of a recording apparatus 50 as a second embodiment in the present invention;
Figs. 10A to 10D are diagrams for explaining operation procedures at the time of key information setting;
Fig. 11 is a flowchart showing an operation which is obtained in association with the time of key information setting in the recording apparatus 50; and
Fig. 12 is a flowchart showing an operation which is obtained in association with the time of key information recording in the recording apparatus 50.

### BEST MODE FOR CARRYING OUT THE INVENTION

Embodiments of the present invention will be hereinafter described. Note that the description will be made according to the order shown below.
1. First embodiment
1-1. Broadcasting system
1-2. Example of an internal structure of a recording apparatus
1-3. Classification code recording
1-4. Processing operation
1-5. Modifications
2. Second embodiment
2-1. Example of an internal structure of a recording apparatus
2-2. Example of operation procedures at the time of key information setting
2-3. Processing operation

### 1. First embodiment

### 1-1. Broadcasting system

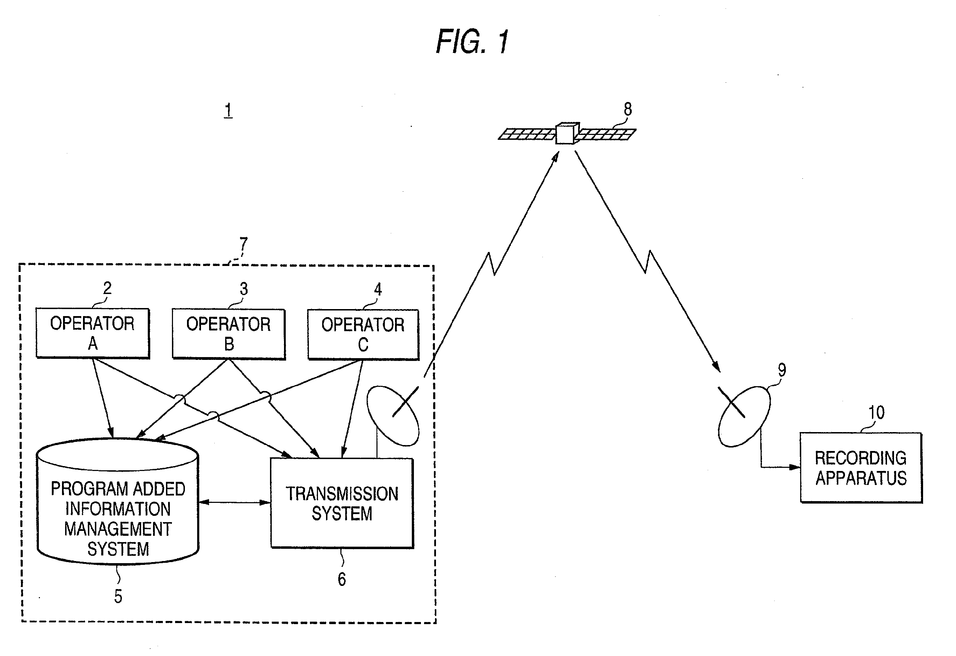

Fig. 1 shows an entire structure of a digital satellite broadcasting system of this embodiment.

In this figure, first, an operator A(2), an operator B (3), an operator C (4), a program added information management system 5, and a transmission system 6 constitute a broad casting facility 7 in the digital satellite broadcasting system 1.

In this broadcasting facility 7, the operator A(2), the operator B(3), and the operator C(4) are broadcasters (broadcasting stations), and create contents data with video and voices to send the contents data to the transmission system 6, respectively. In addition, each of these operators A(2), operator B (3), and operator C (4) sends necessary program added information such as program information indicating broadcasting contents of its own station, which should be shown on an EPG (Electronic Program Guide), to the program added information management system 5.

Moreover, in the case of this embodiment, each of these operator A(2), operator B(3), and operator C(4) sends predetermined classification code information corresponding to details of broadcasting contents, which is currently being sent, to the program added information management system 5.

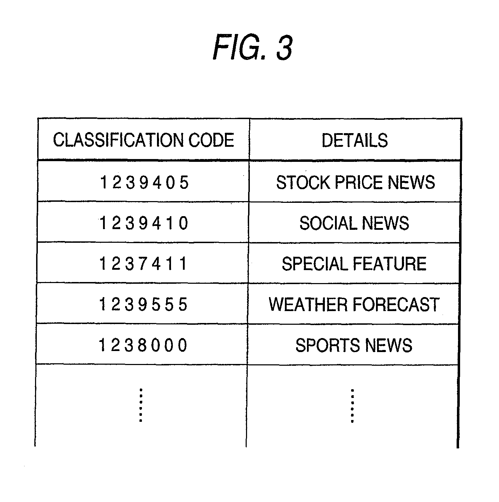

Here, as this classification code information, for example, as shown in Fig. 3, code information with numerals of plural digits is adopted. Further, details of the code information are defied in association with the respective code numbers.

For example, "stock price news" is defined as details corresponding to a code number "1239405" as shown in the figure. In addition, for example, if "1238000" is used, details such as "sports news" are defined.

In the case of this embodiment, details defined by this classification code subdivide details of one broadcasting program. In other words, in this example of Fig. 3, the respective classification codes subdivide details of broadcasting of a news program. In addition, other than the above, for example, in case of a music program, classification code information obtained by further subdividing details of respective programs is defined, for example, classification codes by singer are defined.

Using such classification code information, the operators A to C associate, for example, a classification code of "stock price news" to the "stock price news" as details of contents data which is being sent to the transmission system 6 currently (details of current broadcasting) to thereby send a classification code corresponding to details of contents to the program added information management system 5.

In Fig. 1, the program added information management system 5 mainly performs edition of EPG data, management of common information among the respective operators, management of header information of a broadcasting packet, and the like. Then, the program added information management system 5 sends the EPG data, the header information, and the like edited and managed in this way to the transmission system 6.

In addition, similarly, the program added information management system 5 also sends information on a classification code received from each of the operator A(2), the operator B (3), and the operator C (4) to the transmission system 6 as described above.

The transmission system 6 includes an MPEG encoder, a multiplexer, a base band apparatus, and the like and operates such that contents data supplied from the respective operators is sent as broadcasting data of respective broadcasting channels.

For example, this transmission system 6 is adapted to apply compression coding processing according to the MPEG 2 system to the contents data received from each of the operator A(2), the operator B(3), and the operator C(4). Then, the transmission system 6 multiplexes these compressed contents data and program added information (header information, EPG, etc.) supplied from the program added information management system 5 and synthesizes them to be included, for example, in one transport stream. Further, after applying processing such as addition of an error correction code, modulation, and frequency conversion to a transponder obtained by synthesizing the contents data and the program added information, the transmission system 6 sends and outputs the contents data and the program added information to a broadcasting satellite 8.

In addition, in particular, in the case of this embodiment, on the occasion of the multiplex processing as described above, the transmission system 6 operates such that the classification codes, which have been received from the operator A(2), the operator B(3), and the operator C(4) via the program added information management system 5, are added to contents data of a corresponding broadcasting channel.

Note that, in this case, it is assumed that the classification code information is stored in, for example, a PMT (ProgramMap Table) in PSI (Program Specific Information) .

A broadcasting signal received by a parabola antenna 9 via the broadcasting satellite 8 is supplied to the recording apparatus 10.

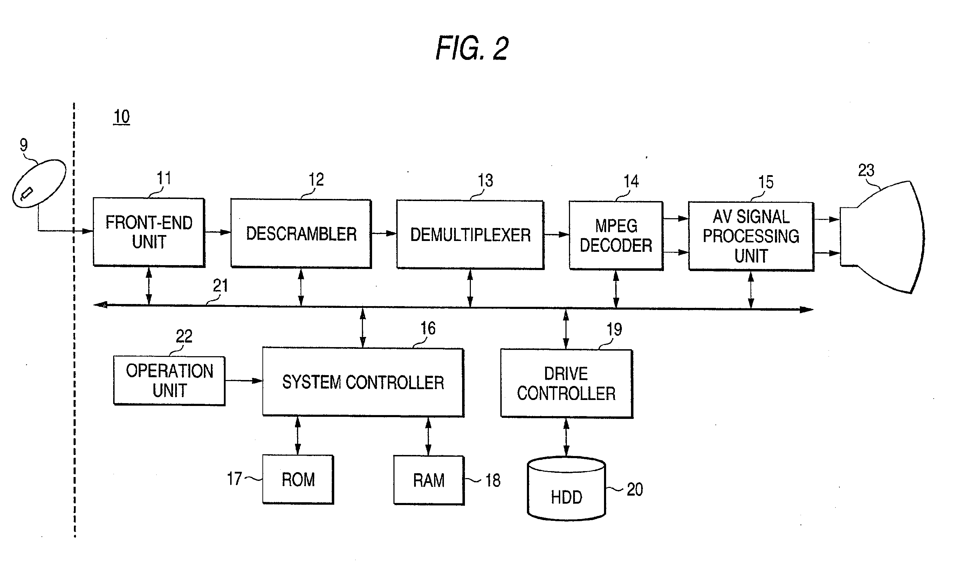

Although illustrated in Fig. 2 in detail, this recording apparatus 10 includes a digital satellite broadcasting tuner to be made capable of receiving the broadcasting data and also made capable of recording contents data included in the broadcasting signal received in this way. In addition, for example, as a recording function utilizing EPG data extracted from the received broadcasting signal, the recording apparatus 10 has a category designated automatic recording function for automatically recording a broadcasting program belonging to a designated specific category out of categories of an EPG, a keyword designated automatic recording function for automatically recording a program including a designated keyword, and the like.

### 1-2. Example of an internal structure of a recording apparatus

Fig. 2 is a block diagram showing an internal structure of the recording apparatus 10 as this embodiment.

First, Fig. 2 also shows the parabola antenna 9 shown in Fig. 1. This parabola antenna 9 receives a broadcasting signal from the broadcasting satellite 8, converts the broadcasting signal into a predetermined high-frequency signal with an incorporated LNB (Low Noise Block Down Converter), and supplies the high-frequency signal to the recording apparatus 10.

In the recording apparatus 10, the received signed, which has been received and converted to a predetermined frequency, is inputted by a front-end unit 11.

The front-end unit 11 receives, on the basis of a setting signal in which transmission data and the like from a system controller 16 connected thereto via a bus 21 are set, a carrier (reception frequency) determined by this setting signal and applies, for example, Viterbi demodulation processing, correction processing, or the like to the carrier to thereby obtain a TS (Transport Stream).

In this TS according to a standard of the digital satellite broadcasting, as it is well known, for example, according to the MPEG2 (Moving Picture Experts Group Layer 2) system, compressed data, which has been obtained by compressing video signals and audio signals of plural programs (video programs), and various kinds of added information are multiplexed. In addition, in the case of this embodiment, as described above, the classification code information, which have been added by the broadcasting facility 7 shown in Fig. 1 according to details of broadcasting, is also multiplexed.

In addition, the compressed data obtained by compressing video signals and audio signals is multiplexed as an ES (Elementary Stream). Further, examples of added information to be inserted by a broadcasting side include a PSI (Program Specific Information) storing tables such as a PAT (Program Association Table) and a PMT (Program Map Table), and an SI (Service Information).

Then, the multiplexing of the various kinds of information is performed by forming the TS with a transport stream packet (TS packet) of 188 bytes and storing the ES and the various kinds of added information in this TS packet.

The TS obtained by the front-end unit 11 is supplied to a descrambler 12.

In addition, the front-end unit 11 acquires a packet of PSI (Program Specific Information) from the TS and updates station-selection information thereof, and also obtains component PIDs (Program IDs) of respective channels in the TS and transmits them to, for example, the system controller 16. The system controller 16 uses the acquired PIDs for received signal processing.

The descrambler 12 receives a descramble key data prepared in advance from the system controller 16 via the bus 21, and the PIDs are set in the descrambler 12 by the system controller 16. Then, the descrambler 12 executes descramble processing on the basis of this descramble key data and the PIDs.

In addition, just for confirmation, it is likely that ESs of plural programs multiplexed in the TS to be outputted from the descrambler 12. Further, added information such as data for data broadcasting and the PSI maybe multiplexed therein without being removed.

A demultiplexer 13 separates a necessary TS packet from the TS, which has been supplied from the descrambler 12, in accordance with filter conditions set by the system controller 16 connected thereto via the bus 21. Consequently, for example, the demultiplexer 13 obtains, as a TS packet for one target program, a TS packet of video data compressed by the MPEG2 system and a TS packet of audio data compressed by the MPEG2 system as, for example, a video program. Then, the demultiplexer 13 outputs the compressed video data and the compressed audio data obtained in this way to an MPEG decoder 14.

In addition, this demultiplexer 13 is adapted to also extract a TS packet of EPG data and a TS packet, in which the added information such as the classification codes shown in Fig. 3 earlier is stored, from the TS as required.

Note that the individual packets of compressed video/audio data, which have been separated by the demultiplexer 13 and is inputted to the MPEG decoder 14, are inputted to the MPEG decoder 14 in a format called a PES (Packetized Elementary Stream), respectively.

In addition, setting of the filter conditions is made such that, for example, the demultiplexer 13 extracts the PAT, the PMT, and the like included in the TS and transfers them to the system controller 16. Then, the system controller 16 is adapted to set the filter conditions with respect to the demultiplexer 13 on the basis of details of information described in the transferred PAT, PMT, and the like.

The MPEG decoder 14 includes a video decoder, which subjects the compressed video data to decode (extension) processing in accordance with the MPEG2 format, and an audio decoder, which subjects the compressed audio data to decode processing so as to be in synchronization with the video data output in accordance with the MPEG2 format. Then, the MPEG decoder 14 applies decode processing to the inputted compressed video data with the video decoder, and applies decode processing to the inputted compressed audio data with the audio decoder.

Then, in this case, the MPEG decoder 14 is adapted to apply required signal processing to, for example, the decoded video data such that image display is performed properly according to a predetermined television system such as the NTSC system, and output the video data as a digital video signal.

In addition, the MPEG decoder 14 is adapted to output the decoded audio data as, for example, a digital audio signal.

In the case of this embodiment, the digital video signal and the digital audio signal outputted from the MPEG decoder 14 are inputted to a drive controller 19 which is connected thereto via an illustrated audio/video signal processing unit (AV signal processing unit) 15 and the bus 21.

As a basic operation in the audio/video signal processing unit 15, the audio/video signal processing unit 15 applies required signal processing to the digital video signal and the digital audio signal inputted from the MPEG decoder 14 and outputs the signals as a video signal and an audio signal for display and output.

The video signal, which has been outputted by the audio/video signal processing unit 15 in this way, is supplied to an illustrated display 23 and displayed and outputted here.

An HDD (hard disk drive) 20 is a random accessible storage which can store programs, data, and the like and includes a large capacity of, for example, several tens GB or 100 GB or more.

This HDD 20 is connected to the system controller 16 via the drive controller 19 and the bus 21. As this drive controller 19 operates on the basis of control from the system controller 16, recording/reproduction of various data is executed. For example, recording and reproduction of the digital video/audio signal supplied from the MPEG decoder 14 are performed.

The digital video signal and the digital audio signal as contents data reproduced from this HDD 20 are supplied to the AV signal processing unit 15 via the drive controller 19 and outputted to the outside.

As it is understood from the above description, the system controller 16 executes various kinds of control processing such that a required operation in the recording apparatus 10 is obtained.

For example, this system controller 16 performs necessary processing for performing various recording operations such as the category designated automatic recording, the keyword designated automatic recording, and the like based upon the acquired EPG data. In addition, in particular, in the case of this embodiment, the system controller 16 is also adapted to perform various kinds of control processing for a recording control operation based upon the classification code information extracted by the demultiplexer 13. Note that such processing operations as this embodiment will be described later.

A ROM 17 and a RAM 18 are provided for the system controller 16 as illustrated.

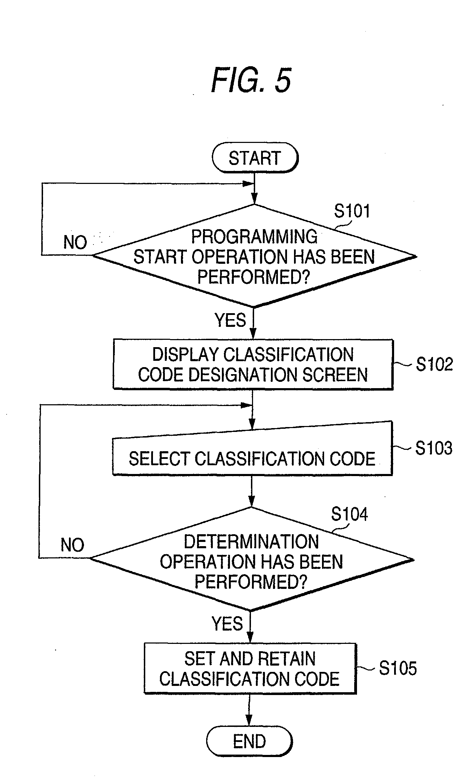

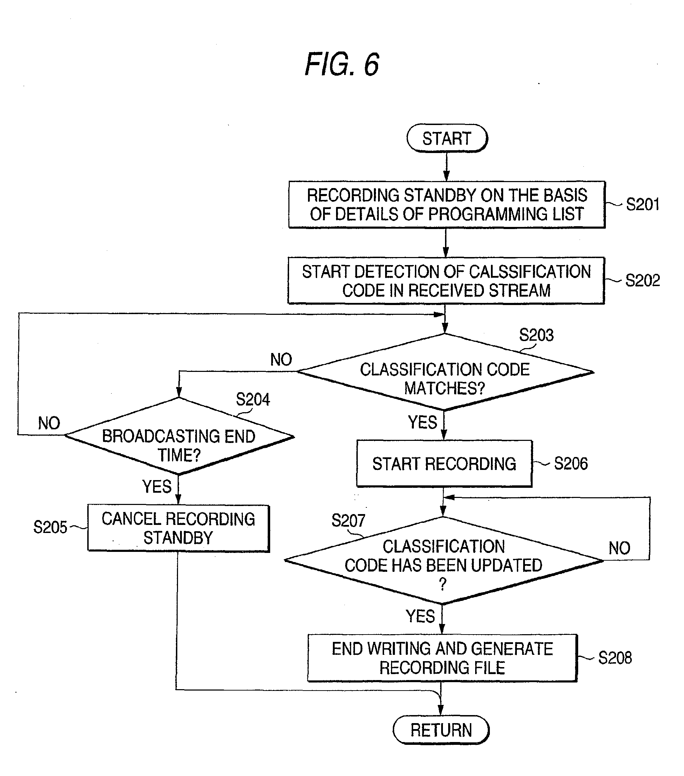

In the ROM 17, a program, which should be executed by the system controller 16 in order to realize the various kinds of control processing, and various kinds of initial setting information are stored. In addition, in particular, in the case of this embodiment, a program for realizing an operation for classification code recording as shown in Figs. 5 and 6 to be described later is also recorded in this ROM 17.

In the case of this embodiment, this ROM 17 includes a nonvolatile memory element, which maintains data storage even if power supply stops and is rewritable, such as a flash memory. Further, for example, a recording programming list and the like required in performing the various recording operations are retained with respect to an area serving as this nonvolatile memory.

In addition, data which is required when the system controller 16 executes the various kinds of control processing is retained in the RAM 18 according to circumstances.

Further, an operation unit 22 is connected to the system controller 16. Various operation knobs for performing operations with respect to the recording apparatus 10 are provided in this operation unit 22. Further, an operation signal corresponding to an operation applied to these operation knobs is outputted to the system controller 16. The system controller 16 executes required control processing such that an operation corresponding to an inputted operation command is obtained.

Note that user interface means using a remote controller or the like may be provided other than such an operation unit 22.

### 1-3. Classification code recording

As described above, the digital satellite broadcasting system 1 of this embodiment is adapted to attach, to broadcasting contents to be sent on the broadcasting facility 7 side shown in Fig. 1, a classification code which corresponds to details of the broadcasting. Further, the digital satellite broadcasting system 1 is adapted to receive the broadcasting contents attached with the classification code in this way on the recording apparatus 10 side via the broadcasting satellite 8.

After establishing such a broadcasting system, in this embodiment, it is intended to realize the classification code recording, which records only broadcasting contents attached with a classification code designated in advance, on the recording apparatus 10 side.

In this embodiment, in performing such classification code recording, a so-called automatic recording function such as the category designated automatic recording or the keyword designated automatic recording based upon EPG data is also used.

In short, as described above, a classification code in this embodiment is attached to contents, which is sent by the transmission facility side, according to details of the contents. Thus, the recording apparatus 10 side cannot grasp the details unless actually receiving a broadcasting signal. Inotherwords, the recording apparatus 10 side cannot learn in advance in which time frame of which broadcasting channel contents attached with a target classification code will be broadcasted. Consequently, itbecomes difficult to record only a data part of target contents efficiently simply by designating a classification code.

Thus, as this embodiment, the automatic recording according to designation of a category or a keyword is performed as described above to narrow down programs to be received, and then an operation for recording only a contents part attached with a corresponding classification code is executed.

In other words, prior to performing the classification code recording, first, a user performs setting for recording programming for performing automatic recording and then performs setting for programmed recording by the unit of program. Then, the user selects and designates a desired classification code under the circumstances in which such programmed recording by the unit of program is set.

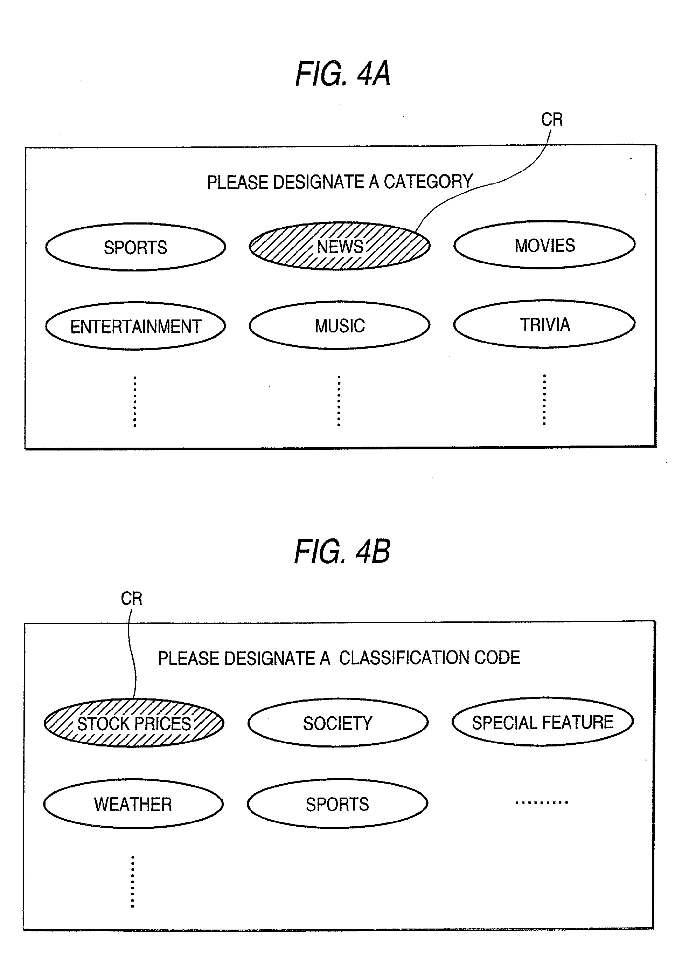

Thus, first, an example of procedures for a setting operation by the user for the classification code recording will be descried with reference to Figs. 4A and 4B.

As described above, in performing the classification code recording, first, recording programming by the unit of program is performed according to, for example, setting of automatic program recording designating a category, a keyword, or the like based upon EPG data. Thus, in the description of Figs. 4A and 4B, a case in which the automatic program recording programming according to category designation will be illustrated as the recording programming by the unit of program.

In Figs. 4A and 4B, first, the user performs the predetermined operation with respect to the operation unit 22 shown in Fig. 2 to thereby display, for example, a category designation screen for performing the category designated automatic recording as shown in Fig. 4A on the display 23.

As this category designation screen, for example, as shown in Fig. 4A, operation buttons, on which categories to be defined in an EPG are indicated, are displayed. In addition, a cursor CR for selecting categories indicated on these operation buttons is also displayed.

The user can move the illustrated cursor CR to select a desired button out of the operation buttons, on which these categories are indicated, by performing an operation via the operation unit 22 to such a category designation screen. Then, after moving the cursor CR to the desired button, the user can designate a category indicated on this button by performing a determination operation via the operation unit 22.

In this case, it is assumed that, for example, a category of "news" has been designated as shown in the figure.

In response to a category being designated by the user in this way, in the recording apparatus 10, first, a program belonging to this category on the EPG is retrieved. Then, the recording apparatus 10 acquires program information (a broadcasting channel and a broadcasting time) of the retrieved program and registers this program information in, for example, a recording programming list retained in the ROM 17, whereby recording programming for the category designated automatic recording is performed.

After performing programming for the category designated automatic recording in this way, the user displays a classification code designation screen as shown in Fig. 4B on the display 23 by performing, for example, a predetermined operation with respect to the operation unit 22.

As this classification code designation screen, for example, all classification codes, which can be attached to contents data on the broadcasting facility 7 side, are displayed as classification items indicating details of the contents data.

In this case, these respective classification items are also displayed as operation buttons. Then, the user can select the respective items (classification codes) by moving the illustrated cursor CR. Then, by setting the cursor CR on a button on which a desired item is indicated and performing a determination operation here, the user can designate a classification code corresponding to details indicated by this classification item.

Note that, in this case, it is assumed that, for example, as shown in the figure, a classification code corresponding to "stock price news" has been selected by the user amongprograms belonging to a category of "news" which should be recorded by the category designated automatic recording.

After programming of the category designated automatic recording has been performed, in response to programming for the classification code recording as this embodiment being performed, an operation for the classification code recording as described below is performed in the recording apparatus 10.

First, in the recording apparatus 10, the category designated automatic recording corresponding to the category of "news" designated as shown in Fig. 4A is performed, whereby a reception operation is performed only for programs belonging to this category of "news". Then, matching of a classification code, which is extracted from contents data of the received programs, and a classification code corresponding to the designated "stock price news" is detected.

Then, the recording apparatus 10 starts a recording operation in response to the classification code extracted from the received contents data matching the classification code. In addition, the recording apparatus 10 ends the recording operation in response to the extracted classification code being changed to another classification code (i.e., details of a program changing at a classification code level).

Consequently, only contents data of details corresponding to the classification code designated by the user as described above can be recorded in the HDD 20.

### 1-4. Processing operation

A processing operation, which the system controller 16 shown in Fig. 2 should perform in order to realize the classification code recording operation as described above, will be described using Figs. 5 and 6.

First, a processing operation corresponding to the classification code recording operation as illustrated in Fig. 4B will be described using a flowchart of Fig. 5.

In Fig. 5, the system controller 16 watches whether an operation for starting programming for the classification code recording is performed according to processing of step S101 shown in the figure. Then, a predetermined operation with respect to the operation unit 22 shown in Fig. 1 is performed. In the case in which a programming start operation is performed, in step S102, the system controller 16 displays and outputs the classification code designation screen as shown in Fig. 4B before on the display 23.

In the subsequent step S103, the system controller 16 causes a user to select a classification code on the basis of the classification code designation screen displayed and outputted as described above. In other words, as illustrated in Fig. 4B, the system controller 16 performs necessary processing such as movement of the cursor CR in response to an operation by the user to thereby cause the user to select a classification item (classification code).

In step S104, the system controller 16 judges whether or not an operation for determining the classification item selected in step S103 has been performed.

In the case in which the predetermined operation with respect to the operation unit 22 has not been performed, and it is judged in this step S104 that the determination operation has not been performed, the system controller 16 advances the processing to step S103 to cause the user to select a classification code again.

In addition, in the case in which the predetermined operation with respect to the operation unit 22 has been performed, and it is judged that the determination operation has been performed, the system controller 16 proceeds to step S105.

In step S105, the system controller 16 sets a classification code corresponding to the classification item selected in step S104 as a classification code for the classification code recording. Then, the system controller 16 retains information on the classification code set in this way in, for example, the ROM 17 shown in Fig. 2 to thereby associate this information on the classification code with a recording programming list.

After executing the processing in this step S105, the system controller 16 ends the processing operation as shown in the figure.

Subsequently, a processing operation for realizing classification code recording based upon details of the programming for classification code recording as described above will be described using a flowchart of Fig. 6.

First, in step S201, the system controller 16 controls the respective units such that a recording standby state is obtained on the basis of details of information currently registered in the recording programming list.

That is, as the processing of this step S201, for example, first, the system controller 16 monitors a broadcasting start time (date and time) of an earliest broadcasting time registered in the programming list. Then, for example, the system controller 16 controls the respective units such that contents data of a broadcasting channel, which is registered in association with this broadcasting time, in response to information on a present date and time generated inside the system controller 16 coinciding with the broadcasting start time.

However, in this case, unless setting is made by an operation of the user to view a program being an object of this recording standby, it is considered unnecessary to display and output the contents data.

Therefore, usually, processing for decoding and outputting the data received as described above with the MPEG decoder 14 is not executed.

In the subsequent step S202, the system controller 16 starts detection of classification code information attached to a TS received by the processing of step S201.

As described above, in the case of this embodiment, the classification code information added to the received TS is stored in, for example, a PMT in PSI (Program Specific Information). Therefore, the processing of this step S202 is performed by extracting the PTM with the demultiplexer 13.

In step S203, the system controller 16 judges whether or not matching of the detected classification code information and the classification code registered in the recording programming list has been detected.

In the case inwhich anegative result is obtainedaccording to the judgment processing of this step S203, the system controller 16 advances the processing to step S204 and judges whether or not a present time is a broadcasting end time registered in the programming list. If it is judged that the present time is not the broadcasting end time yet, the system controller 16 advances the processing to step S203 and judges again whether or not matching of the classification codes has been detected. In addition, if it is judged that the present time is the broadcasting end time, the system controller 16 proceeds to step S205 and cancels the recording standby state as shown in the figure and then proceeds to step S201.

Note that, according to the processing operation for proceeding from step S204 to step S205, it is considered that there is no data part having details corresponding to the designated classification code in the program, which has been registered in the programming list and received this time, and recording for the program is not performed.

However, even in the case in which there is no data part having the designated details in the program as described above, it is likely that the user wishes to record this program.

In such a case, although not described by way of illustration here, a program to which such classification code recording is not applied can be selected and set by the user in advance for the respective programs registered in the programming list.

On the other hand, in the case in which an affirmative result has been obtained in step S203, the system controller 16 proceeds to step S206 and starts a recording operation for contents data which is being received at present. In other words, in the case in which an affirmative result has been obtained in step S203, considering that details of the contents data, which is currently being received, matches details indicated by the designated classification code, the system controller 16 controls the drive controller 19 shown in Fig. 2 to start writing the contents data in the HDD 20.

In the subsequent step S207, the system controller 16 watches whether the classification code attached to the TS is updated to another classification code. Then, in the case in which the classification code has been updated and it is considered that details of the received contents data are different from details indicted by the classification code designated at the time of programming, in step S208, the system controller 16 ends the operation for writing the contents data in the HDD 20 by the drive controller 19 and generates a recording file on the basis of this contents data.

Consequently, only contents data with details, which correspond to the classification code designated in the processing of step S104 shown in Fig. 5, is recorded in the HDD 20.

For example, as illustrated in Figs. 4A and 4B, in the case in which, after the category of "news" is designated according to the category designated automatic recording, for example, the classification code corresponding to "stock price news" is designated, only a data part having details of "stock price news" among programs belonging to the category of "news" is recorded in the HDD 20.

Note that, in the case in which plural classification codes are set by the user at the time of such classification code recording, it is sufficient to judge matching concerning these set plural classification codes according to the processing of step S203. However, in this case, it is likely that a data part matching each of the set plural classification codes exists in an identical programbeing received. Therefore, in this case, even if a recording file for one classification code is generated, if the recording standby state for the program being received is maintained continuously, data parts with details matching all the set classification codes can be recorded without exception.

In this way, in the satellite broadcasting system 1 of this embodiment, a classification code subdividing details of one program is added to broadcasting contents by the broadcasting facility 7 shown in Fig. 1.

Further, on the recording apparatus 10 side which receives the broadcasting contents added with information on such a classification code, by checking matching of the classification code added in this way and a classification code designated in advance, only a data part having details indicated by the designated classification code can be recorded.

Consequently, in the digital satellite broadcasting system 1 of this embodiment, compared with the case in which the conventional programmed recording is performed, designation of recording target contents according to more minute division of details becomes possible.

As a result, according to this embodiment, it becomes possible to omit recording for an unnecessary data part in contents for one program.

In addition, as described above, since the classification code is added according to details of broadcasting on the broadcasting facility 7 (each operator), in the digital satellite broadcasting system 1 of this embodiment, it becomes possible to make a classification code received on the recording apparatus 10 side always in matching with the details of broadcasting.

For example, conventionally, it is difficult to show details of one program on EPG dividing the details into more minute details concerning broadcasting contents, for which temporal scheduling of details of broadcasting tends to be irregular, such as a so-called live program as in a news program or the like. Therefore, conventionally, it is difficult to designate only a data part having specific details at the time of recording from contents forming one program and record only this data part.

On the other hand, in this embodiment in which a classification code can be linked to details of present broadcasting surely as described above, recording based upon information on this classification code is performed on the recording apparatus 10 side, whereby only a data part of specific details in one program can be performed surely as described above.

In addition, the operation of the recording apparatus 10 as described above is realized by a program stored in the ROM 17. Further, if such a program is recorded in a recording medium to form, for example, a package medium, it becomes easy to provide the program for realizing the operation of the recording apparatus 10 as the first embodiment, which is preferable for designing of an apparatus and establishment of a system.

Note that the recording medium for recording the program can also be realized by an optical disk of a CD system, a DVD system, or an MD system, amagnetic disk such as amagneto-optical disk or a flexible disk, a HDD (hard disk drive), a memory card using a solid-state memory, and the like.

### 1-5. Modifications

Here, a modification of the first embodiment will be described.

As this modification, concerning contents data such as weather forecast which is recorded by the classification code recording as described above, data to be recorded anew is overwritten on data already recorded, whereby contents data is sequentially updated for every recording. Consequently, only latest recorded contents among contents added with an identical classification code are retained in the HDD 20.

Note that the recording according to this modification is effective in automatically recording contents data, which is considered to have a higher information value as it is fresher as information, such as information on stock prices in a news program or the weather forecast described above. In other words, it can be considered that latest ones of these details of information are useful for a user and those older than the latest ones are unnecessary for the user. Thus, if the classification code recording as this modification is performed, for example, concerning stock prices, only latest information is always stored in the HDD 20 as a recording file, whereby recording files older than the recording file are deleted. Thus, it becomes possible to more effectively save a storage capacity of the HDD 20.

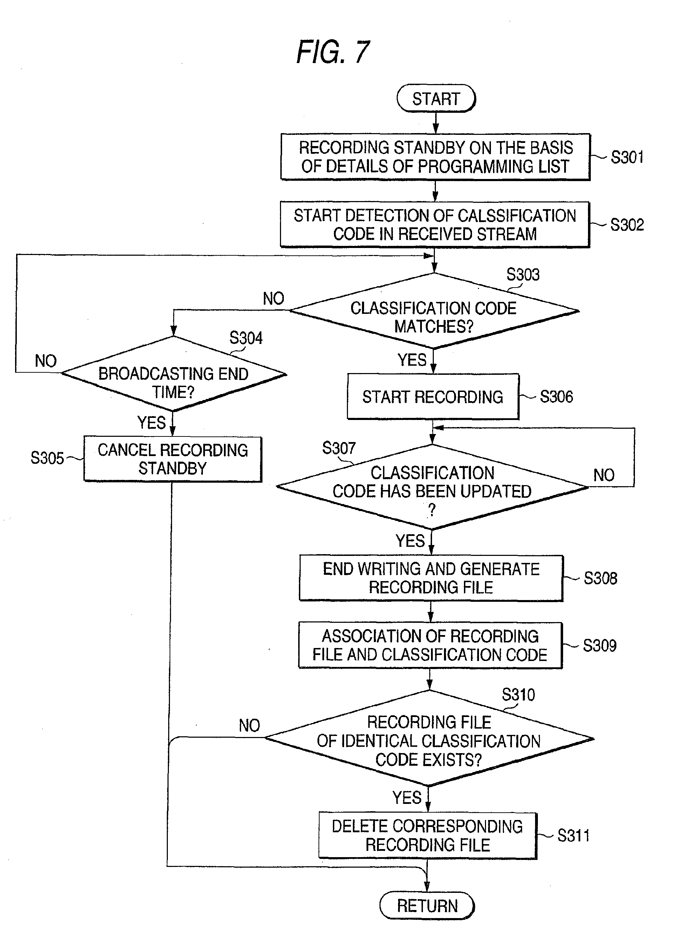

In realizing the operation of such a modification, a processing operation, which the system controller 16 should perform, will be described using a flowchart of Fig. 7.

First, in this modification, the operation of the classification code recording illustrated in Fig. 6 before is also performed as a basic operation. Therefore, the illustrated processing operation from step S301 to step S308 is equivalent to the processing from step S201 to step S208 shown in Fig. 6. In other words, in this case, the operation for recording only contents data added with a classification code designated by a user is the same as that in the first embodiment.

However, in this case, as processing after a recording file is generated by the recording end processing in step S308 (processing equivalent to step S208 shown in Fig. 6, the illustrated processing operation from step S309 to step S311 is performed.

First, in step S309, the recording file, which has been generated in step S308 and stored in the HDD 20, is associated with a corresponding classification code and managed.

This is performed, for example, in a file system corresponding to this HDD 20, after defining information indicating a classification code as one piece of attribute information of a file, by writing a classification code corresponding to the recording file generated this time in attribute information of this classification code. Alternatively, a classification code corresponding to the recording file may be written in a header part of the recording file.

That is, the recording file stored in the HDD 20 by the classification code recording in this case is managed such that a classification code indicating details of the recording file is associated therewith in a predetermined format.

Then, in the subsequent step S310, the system controller 16 judges whether or not a recording file, which is associated with a classification code matching the classification code of the recording file recorded by the processing of step S306 and subsequent steps of this time, exists in recording files stored in the HDD 20.

If it is judged that a recording file associated with the identical classification does not exist, the system controller 16 advances the processing to step S301 as shown in the figure and performs the recording standby processing based upon details of the programming list again.

In addition, if it is judged that a recording file associated with the identical classification code exists, the system controller 16 advances the processing to step S311 and executes processing for deleting a corresponding recording file. Consequently, contents data to be recorded by the classification code recording is sequentially updated for every recording, and, concerning contents data which is considered to have identical details in the division of classification codes, only latest recorded data can be retained in the HDD 20.

Note that, concerning contents data, which is considered to have identical details in the division of classification codes, although only latest recorded data is retained in the HDD 20 here, instead of this, for example, latest two or more recorded contents among contents recorded by this modification may be retained. In addition, in this case, it is also possible that the number of contents data of the identical classification code to be retained in the HDD 20 in this way can be variably set by a user operation.

In addition, in this embodiment, as a secondmodification, it is also possible to perform an operation as described below.

As this second modification, rather than recording only a data part added with a designated classification code from received contents data (broadcasting program) as described above, only a data part added with a designated classification code among already recorded contents is left, whereby, as a result, only the data part added with the designated classification code can be retained.

In other words, data parts other than the data part added with the designated classification code among the contents data already recorded in the HDD 20 are deleted, whereby a classified deletion operation for making it possible to retain only a corresponding data part is performed.

In order to realize such a classified deletion operation, first, in this second modification, concerning respective contents data, for example, by a unit of program to be recorded in the HDD 20 as a recording file, information on a classification code received together with the contents at the time or recording is associated with each data part (reproduction time) forming the program and managed. As in the case of the above-mentioned first modification, this information may be managed on a file system of the HDD 20 or may be stored in a header of the recording file.

Consequently, it becomes possible to recognize a data part having details corresponding to a designated classification code out of respective data parts constituting contents data as respective recording files.

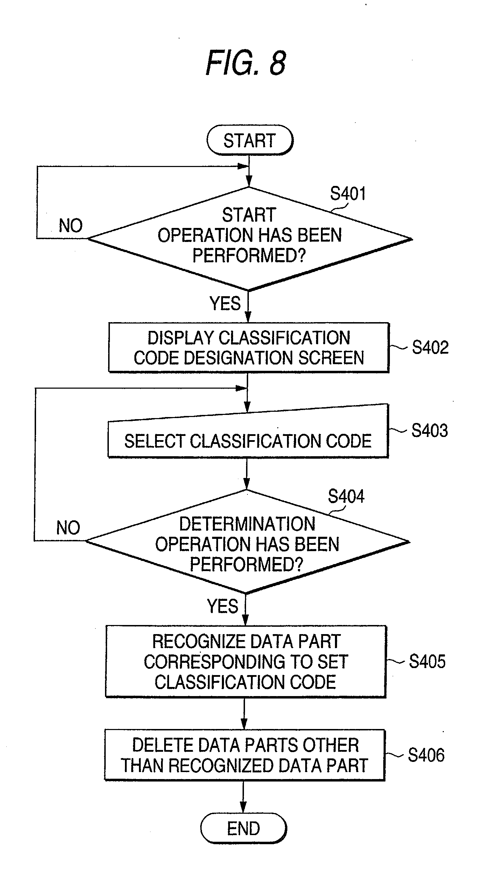

After this, in this second embodiment, a processing operation as shown in Fig. 8 is executed.

In Fig. 8, first, according to processing of step S401, the system controller 16 watches whether or not an operation for starting the classified deletion operation as described above has been performed. Then, for example, in the case in which a predetermined operation with respect to the operation unit 22 shown in Fig. 2 has been performed, and it is judged that the start operation has been performed, the system controller 16 displays a classification code designation screen on the display 23 in step S402.

Note that this classification code designation screen is the same as the one illustrated in Fig. 4B before.

After displaying the classification code designation screen on the display 23 as described above, in the subsequent step S403, the system controller 16 causes a user to select a classification code. In other words, as illustrated in Fig. 4B before, the system controller 16 performs necessary processing such as movement of the cursor CR according to an operation by the user to thereby cause the user to select a classification item (classification code).

In step S404, the system controller 16 judges whether or not an operation for determining the classification item selected in step s403 has been performed.

In the case in which the predetermined operation with respect to the operation unit 22 has not been performed, and it is judged in this step S404 that the determination operation has not been performed, the system controller 16 advances the processing to step S403 and causes the user to select a classification code.

In addition, in the case in which the predetermined operation with respect to the operation unit 22 has been performed, and it is judged that the determination operation has been performed, the system controller 16 proceeds to step S405.

In step S405, after recognizing the classification code corresponding to the classification item determined in step S404, the system controller 16 recognizes a data part corresponding to this determined classification code out of the contents data recorded in the HDD 20. In other words, in this step S405, for example, with reference to management information of the HDD 20 or header parts of respective recording files, the system controller 16 recognizes a data part which is associated with the determined classification code and managed.

In the subsequent step S406, the system controller 16 deletes data parts other than the data part recognized in step S405 in the contents data recorded in the HDD 20. In other words, the system controller 16 updates, for example, details of the file management information table in the file system of the HDD 20 such that the data parts other than the recognized data part are deleted from the recording file.

Consequently, only the data part having contents indicated by the classification code determined in step S404 is retained in the HDD 20.

Note that, although all the data parts other than the data part recognized in step S405 are deleted here, for example, a recording file, which is set as a deletion prevented file by the user in advance, may be excluded from objects of such deletion of designated classification codes.

In addition, opposite to the above-mentioned method, it is also possible that the system controller 16 causes the user to designate a classification code indicating details, which the user wishes to delete, and deletes a data part corresponding to this classification code.

### 2. Second embodiment

### 2-1. Example of an internal structure of a recording apparatus

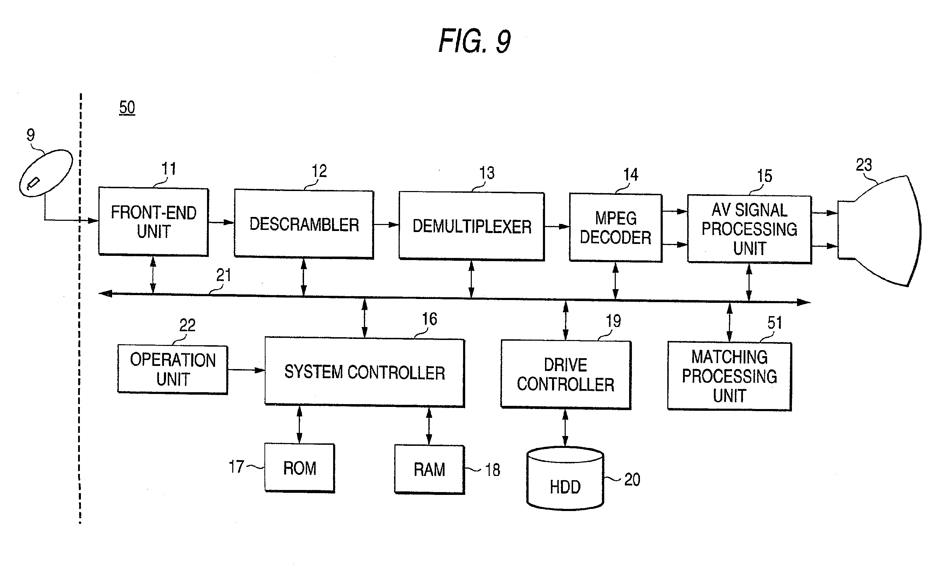

Fig. 9 shows a block diagram showing an example of an internal structure of a recording apparatus 50 as a second embodiment.

Note that, in this figure, components already illustrated in Fig. 2 are denoted by the identical reference numerals, and descriptions of the components will be omitted.

In Fig. 9, the recording apparatus 50 in this case is also adapted to have various automatic recording functions such as the category designated automatic recording and the keyword designated automatic recording in the same manner as the recording apparatus 10 in the first embodiment.

Further, a matching processing unit 51 shown in the figure is provided in the recording apparatus 50 of this case.

This matching processing unit 51 performs so-called analysis processing for an image signal to thereby perform so-calledmatchingprocessing for detecting a data part matching image data set in advance out of digital video data which is inputted from the MPEG decoder 14 as described later.

Then, as the matching of image data is detected in this way, the matching processing unit 51 supplies an output of the detection to the system controller 16 via the bus 21.

### 2-2. Example of operation procedures at the time of key information setting

By constituting the recording apparatus 50 as described above, in this second embodiment, it is attempted to perform key information recording which records only a contents part including data considered to be identical with key information set in advance by a user out of received broadcasting contents.

That is, as in the case of the first embodiment, this second embodiment is also on the premise that, first, a program, which should be received by a predetermined automatic recording function such as the category designated automatic recording and the keyword designated automatic recording, is programmed toberecorded. Then, it is attempted to record only the contents part including the data part matching the key information from the received program with the automatic recording function in this way.

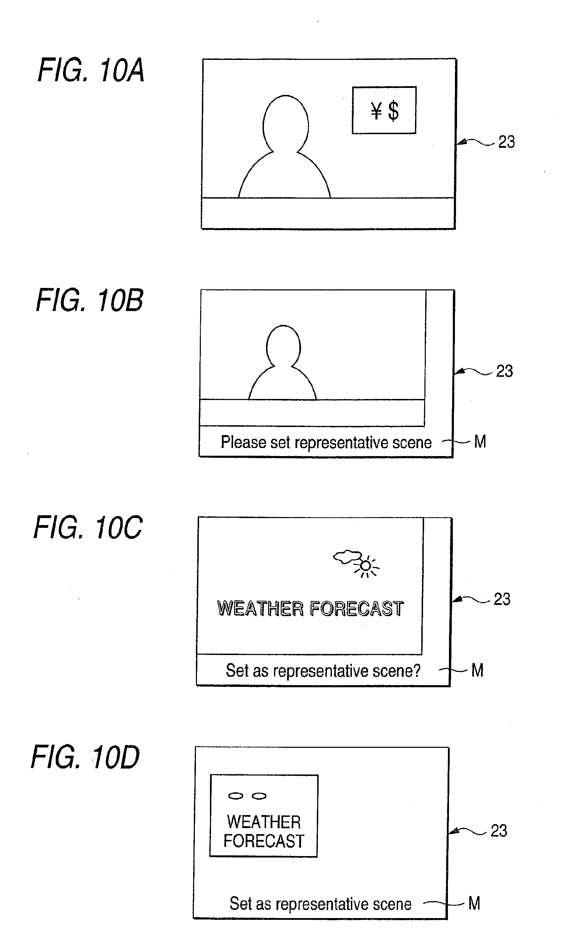

Operation procedures in setting the key information for realizing such key information recording will be describedusing Figs. 10A to 10D.

In Figs. 10A to 10D, in this embodiment, it is assumed that image data is set as the key information set by the user. Here, the key information as image data to be set by the user on the occasion of the key information recording in this way is referred to as a "representative scene".

In addition, in this embodiment, it is assumed that such a representative scene is selected out of contents data as a recording file recorded in the HDD 20 and set.

For this purpose, first, as shown in Fig. 10A, the user reproduces a recording file recorded in the HDD 20 and displays and outputs the recording file on the display 23. Then, after reproducing contents data as such a recording file, when a representative scene is selected from this reproduced video and set, the user applies a predetermined operation to the operation unit 22, whereby a message indication M for setting the representative scene, for example, as shown in Fig. 10B can be displayed together with the reproduced video.

After displaying the message indication M together with the reproduced video in this way, when an image which should be set as the representative scene appears in the reproduced video, the user can select this image as the representative scene by performing a determination operation with respect to the operation unit 22. Then, when the representative scene is selected in this way, the selected image is displayed as a still image on the display 23 as shown in Fig. 10C. In addition, simultaneously with this, the message indication M, on which a message facilitating the user to set this image as the representative scene such as "do you set this as a representative scene?" is shown, is displayed.

By performing, for example, the determination operation with respect to the operation unit 22 in a state shown in Fig. 10C, the user can set the selected image as the representative scene. Then, according to this setting, for example, as shown in Fig. 10D, this set representative scene is displayed on the display 23 and, at the same time, the message indication M showing the message such as "this is set as a representative scene" is displayed, and the user is allowed to confirm that this image has been set as the representative scene.

In response to the representative scene being set according to the operation procedures as described above, in the recording apparatus 50, an operation as described below is performed.

First, in response to the representative scene being set by the user as described above, this representative scene is registered in the recording programming list so as to be associated with program information registered by the automatic recording function described above.

Then, as an operation after the program information and the representative scene have been registered in the programming list, first, a reception operation based upon details of the program information registered in the programming list is performed. In other words, contents data is received on the basis of information on corresponding broadcasting time and broadcasting channel, whereby a recording standby state is obtained.

The recording apparatus 50 waits for the representative scene registered in the programming list to be detected by the matching processing unit 51 shown in Fig. 9 from the received contents data. Then, in response to image data considered to be identical with the registered representative scene being detected by the matching processing unit 51, the recording apparatus 50 starts recording the received data in the HDD 20.

Consequently, the recording apparatus 50 can record only a data part including and following the representative scene set by the user among the contents data as one received program.

### 2-3. Processing operation

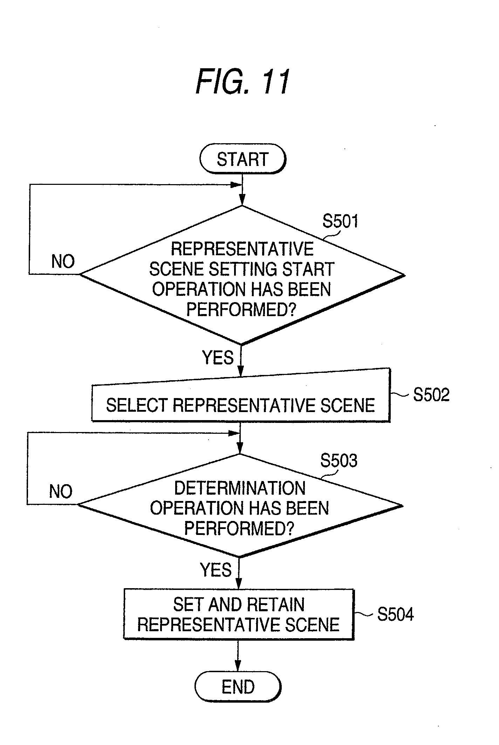

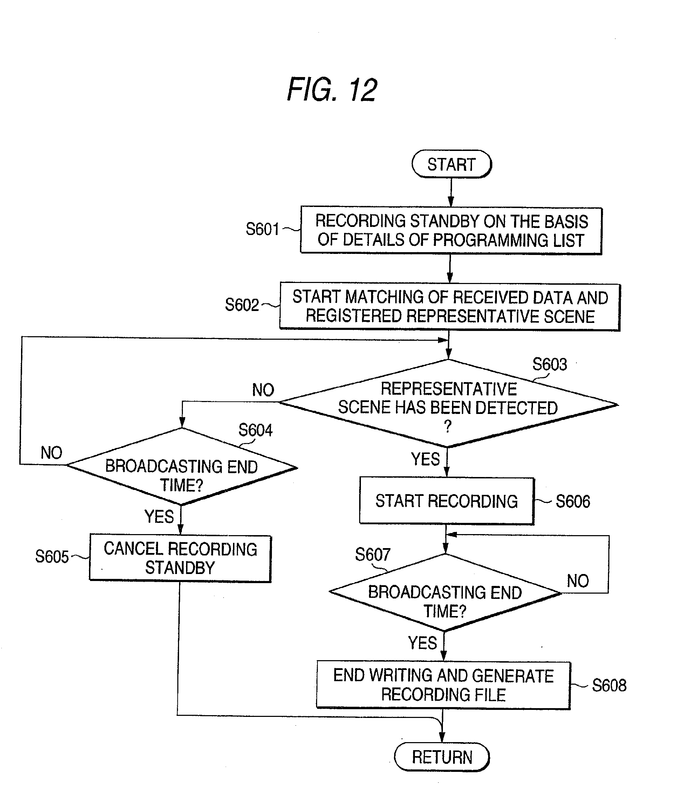

A processing operation, which should be performed by the system controller 16 shown in Fig. 9 in order to realize the operation of the recording apparatus 50, will be described using flowcharts of Figs. 11 and 12.

Note that the processing operation shown in Figs. 11 and 12 is executed by the system controller 16 on the basis of a program stored in the ROM 17 shown in Fig. 9.

First, Fig. 11 shows a processing operation for setting a representative scene as key information illustrated in Fig. 12. Note that, in this figure, it is assumed that reproduction for a recording file including data, which should be set as the representative scene, has already been performed.

In Fig. 11, first, the system controller 16 monitors a representative scene setting start operation according to processing of step S510 shown in the figure. Then, for example, a predetermined operation with respect to the operation unit 22 is performed, and if it is judged that the representative scene setting start operation has been performed, the system controller 16 advances the processing to step S502.

In step S502, the system controller 16 performs necessary processing according to a user operation as illustrated in Figs. 10A to 10D before to thereby select image data which should be set as the representative scene. That is, first, as shown in Fig. 10B, the system controller 16 displays the message indication M together with video of a recording file being reproduced currently which is displayed on the display 23. Then, in response to a determination operation with respect to the operation unit 22 being performed, as shown in Fig. 10C, the system controller 16 displays image data corresponding to a time when the determination operation is performed and, at the same time, displays the message indication M showing a message facilitating a user to set a representative scene.

In the subsequent step S503, the system controller 16 watches whether or not an operation for determining the image data selected in step S502 has been performed. Then, if it is judged that the determination operation by the user has been performed according to, for example, a predetermined operation with respect to the operation unit 22, the system controller 16 proceeds to step S504, and sets the image data as a representative scene and retains the image data.

That is, as shown in Fig. 10D before, the system controller 16 displays the selected image data on the display 23 and, at the same time, displays the message indication M showing, for example, a message indicating that the image data has been set as a representative scene. Then, the system controller 16 retains the image data displayed in this way in, for example, the ROM 17 shown in Fig. 9 and associates the program information already registered in the recording programming list and this representative scene.

Consequently, information required for performing the key information recording as this embodiment has been registered in the programming list.

Subsequently, a processing operation, which should be performed by the system controller 16 in performing a key information recording operation as this embodiment, based upon the information registered in the programming list as described above will be described using a flowchart of Fig. 12.

First, in step S601, the system controller 16 controls the respective units on the basis of details of the information registered in the recording programming list such that a recording standby state is obtained.

That is, the system controller 16 monitors a broadcasting start time (date and time) of an earliest broadcasting time registered in the programming list in the same manner as the processing of step S201 illustrated in Fig. 6 before. Then, for example, the system controller 16 controls the respective units such that contents data of a broadcasting channel, which is registered in association with this broadcasting time, in response to information on a present date and time generated inside the system controller 16 coinciding with the broad casting start time. In addition to this, in this case, the system controller 16 performs the processing such that decode processing for the data received in this way is performed in the MPEG decoder 14.

Note that, as the decode processing in the MPEG decoder 14 in this case, it is sufficient to cause the MPEG decoder 14 to perform processing for a frame image as an object of comparison, which is required for performing matching processing by the matching processing unit 51 to be describe next.

In the subsequent step S602, the system controller 16 starts matching processing for received broadcasting contents by the recording standby operation and the representative scene registered in the recording programming list.

That is, the processing of this step S602 is performed by, for example, setting image data as the representative scene registered in the programming list with respect to the matching processing unit 51. Then, in response to the image data being set in this way, in the matching processing unit 51, an operation for detecting a data part (e.g., frame image data) matching the set image data out of video data to be supplied from the MPEG decoder 14 is started.

In step S603, the system controller 16 judges whether or not a data part (frame image data) matching the representative scene has been detected from the broadcasting contents being received according to the matching processing by the matching processing unit 51.

In the case in which there is not detection output from the matching processing unit 51, and it is judged in step S603 that frame image data matching the representative scene has not been detected, the system controller 16 advances the processing to step S604 and judges whether or not a present time is the broadcasting end time registered in the programming list. If it is judged that the present time is not the broadcasting end time yet, the system controller 16 proceeds to step S603 and monitors detection output from the matching processing unit 51 again. In addition, if it is judged that the present time is the broadcasting end time, the system controller 16 advances the processing to step S605 as shown in the figure and cancels the recording standby state and then proceeds to step S601 described before.

Note that, in this case, according to the processing operation proceeding from step S604 to step S605, it is considered that there is no datapart matching the representative scene in the program which is registered in the programming list and received this time, and recording for the program is not performed.

However, in this case, as illustrated in Fig. 6 before, it is also possible that a program to which this key information recording is not applied can be selected and set by the user in advance for the respective programs registered in the programming list.

On the other hand, in the case in which there is detection output from the matching processing unit 51, and it is judged in step S603 that frame image data matching the representative scene has been detected, in step S606, the system controller 16 starts a recording operation for contents data being received. In other words, the system controller 16 starts writing contents data in the HDD 20 by controlling the drive controller 19 shown in Fig. 1.

In the subsequent step S607, the system controller 16 monitors the broadcasting end time registered in the recording programming list. Then, if a present time is the broadcasting end time, in step S608, the system controller 16 ends the writing operation for the contents data with respect to the HDD 20 by the drive controller 19 and generates a recording file based upon this contents data.

Consequently, only contents data including and following the data part matching the representative scene designated in the processing of step S503 shown in Fig. 11 before is recorded in the HDD 20.

That is, for example, in the case in which a title screen of a specific section in a certain program is set as the representative scene, it becomes possible to record only contents including and following the section out of broadcasting contents forming one program, and a record about an unnecessary data part preceding the section can be omitted.

Note that, as another processing of step S607 described above, for example, the system controller 16 may perform processing as described below. That is, the system controller 16 performs monitoring about details of a classification code added to contents data for which recording has been started and, when the details of this monitored classification code have been changed, ends the recording according to step S608. That is, it is considered that the representative scene to be set by the user is often a start part of a certain section in a program which is classified by classification codes. Thus, if the system controller 16 ends the recording operation according to the change in the details of the classification code in this way, only a section (data part) in the program which is considered to start from an image of the representative scene can be recorded.

In this way, in the recording apparatus 50 as the second embodiment, in response to a representative scene as key information being designated by the user, first, this representative scene is associated with the recording programming list.

In addition to this, in this recording apparatus 50, since the matching processing unit 51 is provided, detection for a data part matching the representative scene out of broadcasting contents, which is received on the basis of details of the programming list, is performed. Then, in response to frame image data matching the representative scene being detected from the broadcasting contents, a recording operation for contents data being received is started.

Consequently, in this recording apparatus 50, it becomes possible to record, as a recording file of a data part corresponding to the representative scene, only contents data including and following the designated representative scene among broadcasting contents as one program as a whole in the HDD 20.

As a result, according to the recording apparatus 50 of this second embodiment, it also becomes possible to omit recording for an unnecessary data part in one program.

In addition, the key information recording in this second embodiment starts recording by detecting specific information included in broadcasting contents in the same manner as the first embodiment.

Consequently, in this second embodiment, as in the case of the first embodiment, for example, even in the case in which a program including a data part to be an object of recording is a live program, and a time when the data part is broadcast becomes early or late, it becomes possible to record the designated data part surely.

Incidentally, as described above, by designating a title screen of a specific section, which is broadcast in one specific program, as the key information, the key information recording function as this embodiment can be made effective.

However, in this second embodiment, other than setting a title screen of such a specific section, for example, by setting a representative scene as described below, it also becomes possible to perform the effective key information recording.

For example, a program part such as sports news in a news program includes a specific tint in a screen, in which a game scene is reproduced, in a large quantity, or has a certain characteristic. As an example, in a scene in which a match of sumo is photographed, a brownish tint is included in relatively a large quantity, and an image quality of a screen is often slightly dark. In a game of soccer, for example, there are relatively a large number of screens including a greenish tint.

If such facts are utilized to set a scene (image) peculiar to a desired item in common in a broadcasting program as the representative scene, for example, a data part of designated common items can be recorded from plural programs belonging to the same category. For example, by setting a scene of a game of soccer as described above, it becomes possible to perform automatic recording targeting only a data part concerning soccer out of plural received programs.

In other words, rather than performing automatic recording corresponding to one section in a specific one program as in the above-mentioned example, it also becomes possible to perform programmed recording targeting all data parts of a desired item which is broadcast in different programs.

In addition, the operation of the recording apparatus 50 as described in this second embodiment is realized by a program stored in the ROM 17. Further, if such a program is recorded in a recording medium to form, for example, a package medium, it becomes easy to provide the program for realizing the operation of the recording apparatus 50 as the second embodiment, which is preferable for designing of an apparatus and establishment of a system.

Note that the recording medium for recording the program can also be realized by an optical disk of a CD system, a DVD system, or an MD system, amagnetic disk such as amagneto-optical disk or a flexible disk, a HDD (hard disk drive), a memory card using a solid-state memory, and the like.

Note that, in the second embodiment, the case in which image data is designated as a representative scene serving as key information is descried as an example. However, other data included in broadcasting contents such as voice data may be adopted as this key information other than the image data. Note that, in this case, it is sufficient to give a necessary data analysis function such as a voice analysis function to the matching processing unit 51.

In addition, in performing the key information recording, the second embodiment is on the premise that recording programming by the automatic recording function such as the category designated automatic recording and the keyword designated automatic recording is performed. However, instead of this, recording programming for the key information recording may be performed by, for example, causing a user to manually input a program frame which is considered to include key information.

Here, in the above-mentioned respective embodiments, the case in which the recording apparatus 10 and the recording apparatus 50 have the receiving function adapted to the digital satellite broadcasting is described as an example. However, other than this function, for example, the recording apparatus of the present invention may be constituted so as to be adapted to the digital ground wave broadcasting or various kinds of analog broadcasting and capable of receiving broadcasting contents.

In addition, according to the above-mentioned respective embodiments, the case in which the classification code recording programming or designation of a representative scene (key information) is performed via the operation unit 22 provided in a main body of the recording apparatus 10 or the recording apparatus 50 is explained as an example. However, such classification code recording programming and designation of a representative scene may be performed by, for example, remote control via a portable terminal device which is connected via a network.

For example, in the case of the classification code recording programming in the first embodiment, on the recording apparatus 10 side, in response to information on a classification code being inputted by the portable terminal device, the inputted classification code is registered in the recording programming list. Consequently, the classification code recording programming via the portable terminal device connected via the network as described above is realized.

In addition, for example, in the case in which the designation of a representative scene in the second embodiment is performed, first, the recording apparatus 50 reproduces a recording file designated by an operation from the portable terminal apparatus and sends this reproduced data to the portable terminal via the network. Then, the portable terminal side selects and designates a representative scene out of the reproduced data supplied in this way and sends the designated representative scene to the recording apparatus 50. If the processing operation in step S404 illustrated in Fig. 11 is performed on the recording apparatus 50 side in response to this, the recording programming for performing recording based upon the designated representative scene is realized.

Note that, in this case, naturally, interface means for performing communication with the portable terminal via a predetermined network is provided in the recording apparatus 10 and the recording apparatus 50.

In addition, the case in which information on a classification code is added to only a broadcasting signal is described as an example, this information on a classification code may be included in advance as information forming an EPG. Consequently, the recording apparatus side can obtain information on a channel and a broadcasting time, in which a data part corresponding to a set classification code is broadcast, in advance. Therefore, in this case, even if not on the premise that setting for recording programming by a unit of program is performed, it becomes possible to perform the classification code recording as described before if only a classification code is set.

As described above, in the present invention, first of all, contents data and classification identifying information, which corresponds to data parts forming the contents data as one program and considered to have contents different from each other and indicates details of the data parts, are sent by a transmission apparatus.

Then, on the recording apparatus side, matching of the received classification identifying information and the designated classificationidentifying information is detected. Further, only a data part corresponding to the classification identifying information, for which matching has been detected in this way, of the received contents data is recorded in storing means.

Consequently, according to the present invention, it becomes possible to record only a required data part in a broadcasting program corresponding to a designated classification identifier.

In other words, according to the present invention, compared with the case in which the conventional programmed recording is performed, it becomes possible to perform designation of contents to be an object of recording according to a further subdivided division of details after adapting the contents to preference of a user. Consequently, it becomes possible to, in the entire contents of one program, record only a data part required by the user in storing means.

As a result, according to the present invention, it becomes possible to obtain a result of recording further complying with the preference of the user, and a utility value and convenience for the user are improved. In addition, for example, in the entire contents of one program, since a data part unnecessary for the user in terms of details thereof is not recorded, it becomes possible to effectively save a capacity of storing means for recording contents. Autility value for the user is improved in this point as well.

In addition, as described above, since the classification identifying information is sent on the transmission apparatus side according to details of contents data to be broadcast, the received classification identifying information on the recording apparatus side and the details of the contents data can be always matched.

Consequently, according to the present invention, it becomes possible to record only a data part of designated details surely out of the contents data to be broadcast.

In addition, in the present invention, secondly, it is made possible to set required data as key information according to an operation. Further, detection for a data part matching the set key information among received contents data is performed and, in the case in which a data part matching the key information has been detected from the received contents data in this way, only a required data part including and following this data part is recorded in storing means. For example, if a specific title screen in a certain program is set as the key information, only contents data at or after a point when a data part matching the title screen is detected from received contents data is recorded.

Consequently, recording for an unnecessary data part before this key information is detected among received contents data can also be omitted, it becomes possible to obtain a result of recoding further complying with preference of the user, and a utility value and convenience for the user can be improved.

In addition, in this case, again, for example, in the entire contents of one program, since a data part unnecessary for the user in terms of details is not recorded, it becomes possible to effectively save a capacity of storing means for storing contents, and a utility value for the user is also improved in this point.

Further, in this case, as the above-mentioned first case, recording is started by detecting specific information included in received contents data. Consequently, in this case, as in the above-mentioned first case, it becomes possible to record a data part of designated details surely out of broadcasted contents data.

## Claims

1. A broadcasting system which comprises at least a transmission apparatus for sending contents data and a recording apparatus which can record the contents data, **characterized in that**
the transmission apparatus comprises:
contents sending means which sends the contents data;
classification information generating means which generates predetermined classification identifying information corresponding to a data part considered to have details of contents different from each other in the contents data as one program; and
classification information sendingmeans which sends the corresponding classification information generated by the classification information generating means so as to associates the classification identifying information with the data part which should be sent by the contents sending means, and that
the recording apparatus comprises:
receiving means which receives the contents data and the classification identifying information;
detecting means which detects matching of the classification identifying information received by the receiving means and classification identifying information designated in advance; and
recording control means which performs control such that only a data part corresponding to classification identifying information, for which matching has been detected by the detecting means, of the contents data received by the receiving means is recorded in storing means.

2. A recording apparatus **characterized by** comprising:
receiving means which receives contents data and classification identifying information which corresponds to and indicates details of a data part considered to have details different from each other forming the contents data as one program;
detecting means which detects matching of the classification identifying information received by the receiving means and classification identifying information designated in advance; and
recording control means which performs control such that only a data part corresponding to classification identifying information, for which matching has been detected by the detecting means, of the contents data received by the receiving means is recorded in storing means.

3. The recording apparatus according to claim 2, **characterized by** further comprising:
classified deleting means which can delete data parts other than a data part corresponding to designated classification identifying information of contents data stored in the storing means.

4. The recording apparatus according to claim 2, **characterized in that**
the recording control means is adapted to, when the data part corresponding to the classification identifying information for which matching has been detected by the detecting means is recorded in the storing means anew, delete required data out of data which is associated with the same classification identifying information as the data part, which should be recorded anew, and is considered to be stored in the storing means.

5. The recording apparatus according to claim 2,
**characterized in that**,
in designating the classification identifying information in advance, the classification identifying information is designated by selecting classification identifying information from a classification identifying information designation screen displayed on a display screen.

6. The recording apparatus according to claim 5,
**characterized in that**,
the classification identifying information is designated by selecting classification identifying information by movement of a cursor from the classification identifying information designation screen displayed on the display screen.

7. The recording apparatus according to claim 2,
**characterized in that**,
designation of the classification identifying information designated in advance is performed by remote control through a portable terminal device via a network.

8. The recording apparatus according to claim 2,
**characterized in that**,
when the detected classification identifying information has been changed, the recording control means performs control such that recording with respect to the storing means is finished.

9. A recording method comprising:
reception processing for receiving contents data and classification identifying information which corresponds to and indicates details of a data part considered to have details different from each other forming the contents data as one program;
detection processing for detecting matching of the classification identifying information received by the reception processing and classification identifying information designated in advance; and
recording control processing for recording only a data part corresponding to classification identifying information, for whichmatching has been detected by the detection processing, of the contents data received by the reception processing in storing means.

10. A program **characterized by** causing a recording apparatus to execute:
reception processing for receiving contents data and classification identifying information which corresponds to and indicates details of a data part considered to have details different from each other forming the contents data as one program;
detection processing for detecting matching of the classification identifying information received by the reception processing and classification identifying information designated in advance; and
recording control processing for recording only a data part corresponding to classification identifying information, for which matching has been detected by the detectionprocessing, of the contents data received by the reception processing in storing means.

11. A recording medium having recorded therein a program for causing a recording apparatus to execute:
reception processing for receiving contents data and classification identifying information which corresponds to and indicates details of a data part considered to have details different from each other forming the contents data as one program;
detection processing for detecting matching of the classification identifying information received by the reception processing and classification identifying information designated in advance; and
recording control processing for recording only a data part corresponding to classification identifying information, forwhichmatching has been detected by the detectionprocessing, of the contents data received by the reception processing in storing means.

12. A recording apparatus **characterized by** comprising:
receiving means which can receive contents data as a broadcasting program;
key information setting means which can set required data as key information according to an operation;
detecting means which detects a data part matching the key information, which has been set by the key information setting means, from the contents data received in the receiving means; and
recording control means which performs control such that only a required data part including and following the data part, for which matching has been detected by the detecting means, of the contents data received by the receiving means is recorded in a storage medium.

13. The recording apparatus according to claim 12, **characterized in that** the key information setting means is constituted so as to be capable of setting image data as the key information.

14. A recording method comprising:
reception processing for receiving contents data as a broadcasting program;
key information setting processing for setting required data as key information according to an operation;
detection processing for detecting a data part matching the key information, which has been set by the key information setting processing, from the contents data received by the reception processing; and
recording control processing for recording only a required data part including and following the data part, for which matching has been detected by the detection processing, of the contents data received by the reception processing in a storage medium.

15. A program **characterized by** causing a recording apparatus to execute:
reception processing for receiving contents data as a broadcasting program;
key information setting processing for setting required data as key information according to an operation;
detection processing for detecting a data part matching the key information, which has been set by the key information setting processing, from the contents data received by the reception processing; and
recording control processing for recording only a required data part including and following the data part, for which matching has been detected by the detection processing, of the contents data received by the reception processing in a storage medium.

16. A recording medium having recorded therein a program for causing a recording apparatus to execute:
reception processing for receiving contents data as a broadcasting program;
key information setting processing for setting required data as key information according to an operation;
detection processing for detecting a data part matching the key information, which has been set by the key information setting processing, from the contents data received by the reception processing; and
recording control processing for recording only a required data part including and following the data part, for which matching has been detected by the detection processing, of the contents data received by the reception processing in a storage medium.
